# EUROPÄISCHE PATENTANMELDUNG

(11) **EP 3 023 397 A1**
(43) Veröffentlichungstag der Anmeldung: **25.05.2016**
(21) Anmeldenummer: 14194510.5
(22) Anmeldetag: 24.11.2014
(51) Int. Cl.: C03C 23/00, B23K 26/40, C03B 33/02, C03B 33/08

(54) **Verfahren zum Abtrennen eines Teils eines spröden Materials**

(71) Anmelder: Manz AG, 72768 Reutlingen (DE)
(72) Erfinder: Meidovan, Vasile Raul, 70597 Stuttgart (DE)
(74) Vertreter: Kohler Schmid Möbus Patentanwälte

(57) **Zusammenfassung**

Bei einem Verfahren zum Abtrennen eines Teils eines spröden Materials (1) entlang einer vorgegebenen Trennlinie (2, 3, 4, 5, 18 - 21) wird das spröde Material (1) entlang der Trennlinie (2, 3, 4, 5, 18 - 21) mit Ausnehmungen versehen und anschließend wird das spröde Material (1) zumindest bereichsweise mit einem flüssigen oder gasförmigen Medium benetzt, derart, dass das Medium in zumindest eine Ausnehmung eindringen kann.

## Beschreibung

Die Erfindung betrifft ein Verfahren zum Abtrennen eines Teils eines spröden Materials entlang einer vorgegebenen Trennlinie, bei dem das spröde Material entlang der Trennlinie mit Ausnehmungen versehen wird.

Es ist bekannt, Geometrien aus einem spröden Material, beispielsweise chemisch gehärtetem Glas, herauszulösen, indem entlang einer Trennlinie mittels eines ersten Lasers das spröde Material mit Ausnehmungen versehen wird. Anschließend wird mit Hilfe eines CO2-Lasers das spröde Material entlang des eingebrachten Pfades erhitzt. Dadurch wird eine thermische Spannung induziert, die für die Ausbreitung eines Risses entlang des Pfades sorgt. Diese Vorgehensweise ist jedoch relativ langwierig, da die Trennlinie noch einmal mit dem CO2-Laser abgefahren werden muss. Außerdem können bei dieser Vorgehensweise Schäden an der Kante des herausgelösten Teils entstehen.

Aufgabe der vorliegenden Erfindung ist es daher, ein schonendes, zuverlässiges und günstiges Verfahren zum Separieren von Teilen eines spröden Materials bereitzustellen.

Gelöst wird diese Aufgabe erfindungsgemäß durch ein Verfahren zum Abtrennen eines Teils eines spröden Materials entlang einer vorgegebenen Trennlinie, bei dem das spröde Material entlang der Trennlinie mit Ausnehmungen versehen wird und anschließend das spröde Material zumindest bereichsweise mit einem flüssigen oder gasförmigen Medium benetzt wird, derart, dass das Medium in zumindest eine Ausnehmung eindringen kann.

Bei einer Ausnehmung im Sinne der vorliegenden Erfindung kann es sich um eine mikroskopische, mechanische Veränderung der Oberfläche des spröden Materials handeln. Insbesondere kann durch einen Laser eine mechanische Veränderung durchgeführt werden. Eine Ausnehmung kann kreisrund oder länglich ausgebildet sein. Eine längliche Ausnehmung kann ein großes Verhältnis von Länge zu Breite aufweisen, beispielsweise im Verhältnis 2:1.

Die Größe einer Ausnehmung kann im µm-Bereich liegen. Insbesondere können der Durchmesser oder die Breite einer Ausnehmung ≤ 10 µm sein.

Die Ausnehmungen können bis zu einer bestimmten Tiefe eingebracht werden oder das spröde Material vollständig durchdringen. In beiden Fällen stellen die Ausnehmungen Kapillaren dar. Aufgrund von Kapillareffekten kann das Medium in die Öffnungen bzw. Ausnehmungen eindringen, was aufgrund des Kapillardrucks eine Separation entlang der Trennlinie bewirkt. Es hat sich gezeigt, dass diese Art der Trennung von sprödem Material sehr schonend ist. Insbesondere können Ausbrüche an der Trennkante minimiert werden.

Gemäß einer Verfahrensvariante kann vorgesehen sein, dass mittels einer Trennlinie eine Geometrie definiert wird, die nach dem Benetzen des spröden Materials entnommen wird. Beispielsweise kann die herausgetrennte Geometrie mittels eines Greifers entnommen werden.

Besonders bevorzugt ist es, wenn als Medium Wasser oder Wasserdampf verwendet wird. Wasser ist aufgrund seiner Oberflächenspannung besonders geeignet. Außerdem dämpft ein flüssiges Medium den Ruck, der beim spontanen Separieren der Teile entsteht, sodass Ausbrüche an der Trennkante minimiert werden. Beim Bedampfen des spröden Materials, beispielsweise mit Wasserdampf, dringt die an der Oberfläche kondensierende Flüssigkeit in die Ausnehmungen ein und bewirkt die Separation der Teile des spröden Materials. Der Vorteil der Verwendung von Wasserdampf liegt u. a. darin, dass der Wasserdampf so dosiert werden kann, dass keine anschließende Trocknung der abgetrennten Teile notwendig ist. Außerdem kann Wasserdampf stoßweise auf das spröde Material aufgebracht werden. Das Abtrennen eines Teils eines spröden Materials kann dadurch besonders gut kontrolliert werden.

Gemäß einer Verfahrensvariante kann vorgesehen sein, dass das spröde Material vollflächig benetzt wird. Insbesondere kann das spröde Material in ein Flüssigkeitsbad gegeben werden, wo dann automatisch eine Trennung entlang der Ausnehmungen, die entlang der gewünschten Trennlinie eingebracht werden, erfolgt.

Alternativ kann vorgesehen sein, dass das spröde Material lokal, z. B. punktförmig, benetzt wird. Insbesondere kann das spröde Material mittels Gas bzw. Dampfstößen benetzt werden. Dadurch kann das Trennen eines Teils eines spröden Materials besonders gut kontrolliert werden, da ganz gezielt nur dort Material abgetrennt werden kann, wo das spröde Material lokal benetzt wird. Sind an anderen Stellen des spröden Materials Ausnehmungen eingebracht, so erfolgt in diesen (unbenetzten) Bereichen keine Abtrennung.

Die besonderen Vorteile des erfindungsgemäßen Verfahrens ergeben sich insbesondere, wenn als sprödes Material Glas, gehärtetes Glas, insbesondere chemisch gehärtetes Glas, Saphir, Keramik oder ein Halbleitermaterial verwendet wird.

Weitere Vorteile ergeben sich, wenn das spröde Material mittels eines Lasers, insbesondere eines gepulsten Lasers, z. B. eines Pikosekundenlasers, mit Ausnehmungen versehen wird. Mit einem solchen Laser können besonders kleine Öffnungen, insbesondere mikroskopische Schädigungen, in das spröde Material eingebracht werden. Außerdem können die Ausnehmungen dadurch sehr schnell eingebracht werden.

Die Ausnehmungen können mit einem Durchmesser≤ 10 µm, insbesondere≤ 2 µm eingebracht werden. Solche kleine Ausnehmungen sind ausreichend, um ein Abtrennen eines Teils eines spröden Materials bewirken zu können.

Dabei können die Ausnehmungen in einem insbesondere beliebig variierbaren Abstand, vorzugsweise jedoch zwischen 10 µm und 20µm (zwischen den Rändern benachbarter Ausnehmungen), eingebracht werden. Die Bereiche zwischen den Ausnehmungen werden abgetrennt, wenn das Medium in die Ausnehmungen gelangt und aufgrund des Kapillardrucks eine so große Kraft entsteht, dass das Material zwischen zwei benachbarten Ausnehmungen durchbricht.

Das erfindungsgemäße Verfahren kann unterstützt werden, wenn das spröde Material und/oder das Medium mittels einer Körperschallquelle oder einer Ultraschallquelle in Schwingungen versetzt werden. Dies kann insbesondere vorteilhaft sein, wenn als sprödes Material ungehärtetes Glas verwendet wird, weiches eine relativ geringe intrinsische Spannung aufweist.

Bei einer Verfahrensvariante kann vorgesehen sein, dass Trennlinien für Entlastungsrisse definiert werden. Das spröde Material kann entlang dieser Trennlinien mit Ausnehmungen versehen werden und anschließend, beispielsweise gezielt mittels lokaler Benetzung, entlang dieser Ausnehmungen aufgetrennt werden. Dadurch können Geometrien, die noch genutzt werden sollen, freigelegt werden. Außerdem kann dadurch die Abfallgröße des spröden Materials bestimmt werden.

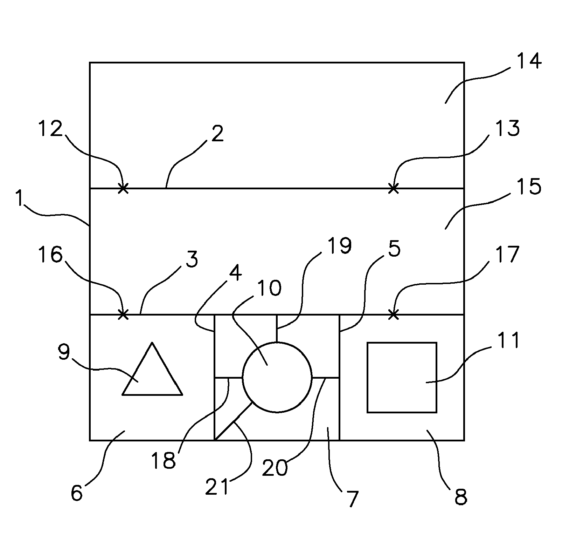

Weitere Merkmale und Vorteile der Erfindung ergeben sich aus der nachfolgenden Beschreibung eines Ausführungsbeispiels der Erfindung, anhand der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Die einzige Figur zeigt eine Draufsicht auf ein flaches sprödes Material, wie beispielsweise chemisch gehärtetes Glas. Das spröde Material 1 wird im gezeigten Ausführungsbeispiel mittels definierter Trennlinien 2 bis 5 in unterschiedliche Segmente unterteilt. Entlang der definierten Trennlinien 2 bis 5 wird das spröde Material 1 mit Ausnehmungen versehen indem Sacklöcher oder durchgehende Öffnungen in dem spröden Material 1 erzeugt werden. Außerdem werden in den Segmenten 6, 7, 8 unterschiedliche Geometrien 9, 10, 11 mittels Trennlinien definiert, entlang denen wiederum das spröde Material 1 gelocht wird.

Die Trennlinien können dabei gedachte bzw. gewünschte Trennlinien sein. Beispielsweise können sie Kurven sein, die einer Steuerung zur Verfügung stehen, sodass ein Laser so gesteuert werden kann, dass er ein sprödes Material entlang der vorgegebenen Kurve abfährt und dabei Ausnehmungen in dem spröden Material erzeugt.

Das Einbringen der Ausnehmungen erfolgt mittels eines gepulsten Lasers. Anschließend kann das spröde Material 1 beispielsweise zunächst an den Stellen 12, 13 mit einem gasförmigen Medium benetzt werden, was dazu führt, dass an diesen Stellen das gasförmige Medium in die Ausnehmungen eindringt, was zu einer Trennung der Segmente 14, 15 entlang der Trennlinie 2 führt. Anschließend kann beispielsweise an den Stellen 16, 17 benetzt werden, sodass eine Trennung entlang der Trennlinie 3 erfolgt. Die verbleibenden noch zusammenhängenden Segmente 6, 7, 8 können dann beispielsweise anschließend in ein Flüssigkeitsbad gelegt werden, sodass Flüssigkeit in die Ausnehmungen entlang der Trennlinien 4, 5 sowie die die Geometrien 9, 10, 11 begrenzenden Trennlinien gelangt. Weiterhin ist beim Segment 7 gezeigt, dass Entlastungsrisse definiert wurden, indem weitere Trennlinien 18 bis 21 vorgesehen wurden, entlang denen ebenfalls das spröde Material 1 gelocht wurde. Auf diese Art und Weise kann die Größe des Abfallmaterials, welches die Geometrie 10 umgibt, definiert werden.

## Patentansprüche

1. Verfahren zum Abtrennen eines Teils eines spröden Materials (1) entlang einer vorgegebenen Trennlinie (2, 3, 4, 5, 18 - 21), bei dem das spröde Material (1) entlang der Trennlinie (2, 3, 4, 5, 18 - 21) mit Ausnehmungen versehen wird und anschließend das spröde Material (1) zumindest bereichsweise mit einem flüssigen oder gasförmigen Medium benetzt wird, derart, dass das Medium in zumindest eine Ausnehmung eindringen kann.

2. Verfahren nach Anspruch 1, **dadurch gekennzeichnet, dass** mittels einer Trennlinie eine Geometrie (9, 10, 11) definiert wird, die nach dem Benetzen des spröden Materials (1) entnommen wird.

3. Verfahren nach einem der vorhergehenden Ansprüche, **dadurch gekennzeichnet, dass** als Medium Wasser oder Wasserdampf verwendet wird.

4. Verfahren nach einem der vorhergehenden Ansprüche, **dadurch gekennzeichnet, dass** das spröde Material (1) vollflächig benetzt wird.

5. Verfahren nach einem der vorhergehenden Ansprüche, **dadurch gekennzeichnet, dass** das spröde Material (1) lokal benetzt wird.

6. Verfahren nach einem der vorhergehenden Ansprüche, **dadurch gekennzeichnet, dass** als sprödes Material (1) Glas, gehärtetes Glas, Saphir, Keramik oder ein Halbleitermaterial verwendet wird.

7. Verfahren nach einem der vorhergehenden Ansprüche, **dadurch gekennzeichnet, dass** das spröde Material (1) mittels eines Lasers, insbesondere eines gepulsten Lasers, mit Ausnehmungen versehen wird.

8. Verfahren nach einem der vorhergehenden Ansprüche, **dadurch gekennzeichnet, dass** die Ausnehmungen mit einem Durchmesser < 10 µm, insbesondere < 2 µm eingebracht werden.

9. Verfahren nach einem der vorhergehenden Ansprüche, **dadurch gekennzeichnet, dass** die Ausnehmungen in einem insbesondere beliebig variierbaren Abstand, insbesondere in einem Abstand zwischen 10 µm und 20 µm, eingebracht werden.

10. Verfahren nach einem der vorhergehenden Ansprüche, **dadurch gekennzeichnet, dass** das spröde Material (1) und/oder das Medium mittels einer Körperschallquelle oder einer Ultraschallquelle in Schwingungen versetzt werden.

11. Verfahren nach einem der vorhergehenden Ansprüche, **dadurch gekennzeichnet, dass** Trennlinien (18 - 21) für Entlastungsrisse definiert werden.
